# EUROPEAN PATENT APPLICATION

(11) **EP 1 810 601 A1**
(43) Date of publication of application: **25.07.2007**
(21) Application number: 06425029.3
(22) Date of filing: 20.01.2006
(51) Int. Cl.: A47J 41/00

(54) **Plug for carafes or the like provided with temperature sensor**

(71) Applicant: Ater S.r.l., 20020 Lainate MI (IT)
(72) Inventor: Terracciano, Simone, 20090 Buccinasco (MI) (IT)
(74) Representative: Marietti, Giuseppe

(57) **Abstract**

A cap (1) for carafes or similar containers, which is provided with a lower base (3) that can be firmly fastened to the mouth (20) of said carafe (6), and comprising a thermometer (11) provided with a sensor (14) at least partially arranged within (5) the carafe (6) for detecting, either directly or indirectly, the temperature of the liquid (7) contained therein, and a temperature display (10) that can be read from the outside. Advantageously, the lower base (3) of said cap (1) is provided, at the mouth (20) of said carafe (6), with at least one passageway (60) for the fluidic connection between the inside (5) and the outside of the carafe (6), and in that said thermometer (11), which can be operated either directly or indirectly moves between a first position where a closing/opening stopper (16), integral with said sensor (14), can be firmly associated with said at least one passageway (16), to prevent the liquid (7) from being spilled out of the carafe (6), and a second position where said stopper (16) is disjoint from said at least one passageway (60), for allowing pouring the liquid (7) from the carafe (6).

## Description

### FIELD OF THE INVENTION

The present invention relates to a cap provided with a thermometer for carafes or similar containers. Particularly, the invention relates to a cap suitable for thermally insulated containers, or containers that are usually employed for containing cold or hot liquids, for example, coffee, tea or the like, the temperature of which has to be known.

It should be also observed that, while hereinafter particular reference will be made to said thermal carafes or said containers for thermally-treated liquids, as those skilled in the art will appreciate said caps may be also easily used in different fields, whenever the temperature of a liquid contained within a vessel has to be known.

### Background of the art

According to the prior art, said caps for carafes or similar thermal containers are provided with a lower base that can be sealingly fastened to the mouth of said carafe, such as by means of threaded members, or by interference between the parts, or the like. When those carafes are provided with a spout suitable to facilitate the pouring of the liquid contained in the carafe body, the cap has a coupling portion arranged at the carafe mouth, particularly at the carafe neck, such that the fluidic connection is completely blocked between the inside and the outside of the carafe. Said prior art caps have been further developed for allowing the user to pour the liquid contained within the container without removing the cap. This can be done by means of a lever that is rotatably connected to a suitable stopper situated within a hole drilled in the cap. When the user moves the lever downwards, or upwards, the stopper is moved upwards, or downwards, thus clearing the passageway so that the liquid contained within the container body can be poured therefrom.

Even though said prior art caps are effective in slowing heat loss throughout the container and avoiding spillage of the liquid when the container is turned upside down, they do not allow monitoring the temperature of the liquid contained within the carafe.

To meet this requirement, carafe caps are known to be provided with a thermometer for detecting the temperature inside the container and/or the liquid contained therein.

For example US 1537216 describes a cap for a thermal container provided with a thermometer for example of the type consisting of an elongated stem, which acts as thermal sensor, and a substantially cylindrical temperature display. Advantageously, the outer surface of the display has such a shape as to be snap fitted to the cap, which in turn can be either screwed or interference fitted to the container mouth. When the liquid is poured, the cap is completely removed together with the temperature measuring device. According to an alternative way of use, the thermometer can be removed from the cap thus leaving a passage for pouring the liquid from the container.

As may be understood, the fact that the cap, or only the thermometer, or both of them has to be completely removed is, however, a clear disadvantage for the end user, who has to perform a greater number of operations than those required for pouring the liquid.

### Object of the present invention

The object of the present invention is to provide a cap for carafes or thermal containers, which along with the possibility of continuously monitoring the temperature of the liquid contained within said carafes, also allows pouring the liquid without having to remove the cap or thermometer completely from their seats.

A further object of the present invention is to do so by means of a simple and cost-effective structure.

### Summary of the present invention

These and other objects of the present invention are achieved by means of a cap for carafes or similar containers, which is provided with a lower base that can be firmly fastened to the mouth of said carafe, and comprising a thermometer provided with a sensor at least partially arranged within the carafe in order to detect, either directly or indirectly, the temperature of the liquid contained therein, and a temperature display that can be read from the outside.

Advantageously, the lower base of said cap is provided, at the mouth of said carafe, with at least one passageway for fluidic connection between the inside and outside of the carafe, and furthermore said thermometer, which is either directly or indirectly operated, is movable between a first position where a closing/opening stopper, integral with said sensor, can be firmly associated to said at least one passageway for preventing the liquid from being poured from the carafe, and a second position where said stopper is disjoint from said at least one passageway, for allowing the liquid to be poured from the carafe.

According to a further aspect of the invention, the thermometer sensor is disc-shaped and suitable to obstruct said at least one passage formed on the cap coupling portion.

In addition, the cap may comprise a hole, preferably a central through hole, which is shaped such as to accommodate said thermometer which is movable in translation within the hole. According to a preferred embodiment of the invention, said sensor and said temperature display are rigidly connected by an elongated stem for transmitting the temperature value; said elongated stem operates within said central hole.

Advantageously, the cap can comprise elastic return means for said stopper such that the latter can be normally associated to said at least one passageway of said fitting portion in a firm manner, in order to prevent the liquid from being poured from the carafe also when the carafe is inadvertedly turned upside down. Said return means comprise an helical spring arranged between the lower surface of said temperature display and at least one seat formed within said hole.

According to the type of stopper and thermometer used, the sensor can coincide with the stopper or not, or can be partially provided with an elongated portion that is directly connected to the temperature display. In the latter case, the stem is a part of said sensor and/or said stopper.

Upon use, when the liquid has to be poured from the container, by pressing on the thermometer display, the user directly operates the stopper and/or the sensor, which moves away from said at least one passageway formed on the cap coupling portion, thereby a fluidic connection is created between the inside and the outside of the carafe. The thermometer can thus act both as a drive lever and a stopper.

When the thermometer display is released, said return elastic means will bias the stopper again in association with said at least one passageway of said cap coupling portion, in order to avoid pouring the liquids contained within the carafe. This position of the stopper is the one normally seen by the user before using the carafe or container.

According to the preferred embodiment of the invention, the lower base of the cap is provided with a coupling portion that is so shaped to be sealingly associated with the mouth of said container or said carafe. When the container is made of an insulating material, the cap is also made of an insulating material such that the maximum level of thermal insulation is ensured to the carafe or container.

In addition, according to the invention the cap can comprise means for firmly locking said elongated stem in an opening position for said sensitive member. Said means for locking said stem comprise at least one threaded pin and a corresponding associated seat, which is arranged on the elongated stem. Advantageously, the pin can be rotatably driven by means of an outer knob.

According to a further embodiment of the invention, said thermometer can be operated in an indirect manner by using a drive lever. The drive lever can be pivoted within the cap and provided with a middle portion fastened to the elongated stem of said thermometer. Rotating the lever from the top down, or vice versa, causes the thermometer and accordingly the stopper integral therewith to move, thereby allowing or not the fluidic connection between the inside and the outside of the carafe.

According to a further embodiment of the invention, said lever can be pivoted at the stem of said thermometer and rotate crosswise to the moving direction of said thermometer, in order to allow or prevent the fluidic connection between the inside and the outside of the carafe. In this case, the lever is provided with a slot associated with a pin arranged on the stem of said thermometer. When the lever is rotated about the stem axis, the pin is axially drawn upwards or downwards. The stopper, integral with said pin, moves in a consequent manner thereby allowing or not the fluidic connection between the inside and the outside of the carafe.

Further characteristics and advantages of the present invention will be more clearly understood from the detailed description of one or more preferred, although non exclusive, embodiments of the carafe cap such as illustrated in the annexed figures, in which:
Fig. 1 is a sectional view of a cap according to the invention in the closing position;
Fig. 2 is a sectional view of the cap, in the opening position;
Fig. 3 is a sectional view of the cap in accordance with a second embodiment of the invention in the closing position;
Fig. 4 is a sectional view of the cap of Fig. 3, in the opening position;
Fig. 5 is a sectional view of the cap in accordance with a third embodiment of the invention, in the closing position;
Fig. 6 is a sectional view of the cap of Fig. 5, in the opening position;
Fig. 7 is a sectional view of the cap according to a fourth embodiment of the invention, in the opening position;
Fig. 8 is a sectional view of the cap of Fig. 7, in the opening position;

### Detailed description

With particular reference to the figures, with **1** has been generally designated the cap according to the invention.

The cap **1** according to a preferred though not limiting embodiment of the invention comprises a semi-ovoidal outer shell **2,** and a lower base **3,** substantially cylindrical, which is firmly fastened to the outer shell **2** through a snap or interference connection or the like, and provided with a through hole **4** connecting the inside **5** of the carafe **6** to the outside thereof. In addition, on the lower part of the base **3,** protruding therefrom, there is arranged a coupling portion **13,** substantially having the shape of a truncated cone, which can be associated with the mouth **20** of said carafe **6.** The lower base **3** of the cap **1** can be provided, at the peripheral wall **21** thereof, with threaded members **22** for firmly coupling said cap **1** to said carafe **6** at the side walls **51** facing the mouth **20.** This solution allows holding the cap **1** on the mouth **20** of the carafe **6** thereby preventing that the liquid **7** contained within the carafe **6** may be poured through the spout **52** of the carafe **6,** when the latter is inadvertedly turned upside down.

While a cap **1** consisting of two separate components, i.e. an outer shell **2** and a lower base **3** has been described heretofore, a cap made as one piece or consisting of two symmetrical pieces welded together still falls within the scope of protection of the present patent. Furthermore, it should be observed that the firm connection between the cap **1** and the carafe **6** can also take place by interference between the parts or through suitable connecting means (not shown herein) that are adapted to fasten the cap to the carafe, without using the threaded members **22** arranged at the peripheral wall **21** of the cap.

Again, according to the preferred embodiment of the invention, the outer shell **2** of the cap **1,** at the upper end **4a** of the through hole **4,** accommodates the temperature display **10** of a thermometer **11,** for example a bimetallic or resistance thermometer or the like. This allows a user to immediately read the temperature value of the liquid **7** shown on the display **10.** Said temperature display **10** can be either analogue or digital without departing from the scope of protection of the present patent.

Said thermometer **11** further consists of an elongated stem **12** for transmitting the temperature as detected by the sensor **14,** which is at least partially arranged below the lower base **3** of the cap **1** at the inside **5** said carafe **6** for detecting the temperature of the liquid **7** contained therein. At both ends **9** and **50** of said elongated stem **12,** which operates in the middle portion **4b** of said through hole **4** of cap **1,** there are integrally connected said temperature display **10** and said sensor **14,** respectively. Thereby, the display **10** is situated on the upper part of the cap **1,** within the shell **3,** whereas the sensor **14** is situated below the lower base **3** of said cap **1.** According to a peculiar aspect, the sensor **14** can be disc-, or alternatively, rod-shaped or of any other shape as long as it is suitable to detect the temperature of the liquid **7** contained in the carafe **6.** In addition, according to the type of thermometer used, the sensor can be made of various materials. With a bimetallic or resistance thermometer **11,** the sensor **14** is made of metal. Furthermore, the elongated stem **12** can also be a part of the sensor **14,** thereby cooperating with the latter for detecting the temperature of the liquid **7** contained within the carafe **6.**

The lower base **3** of the cap **1** can have a coupling portion **13,** that can be sealingly associated with the mouth **20** of the carafe **6,** and which is reversed cup-shaped with truncated cone-shaped side surfaces **15.** In addition, the coupling portion **13** has four passageways **60** therein, with circular section (only two of the four passageways are shown in the figures), for fluidic connection between the inside **5** and the outside of the carafe **6.**

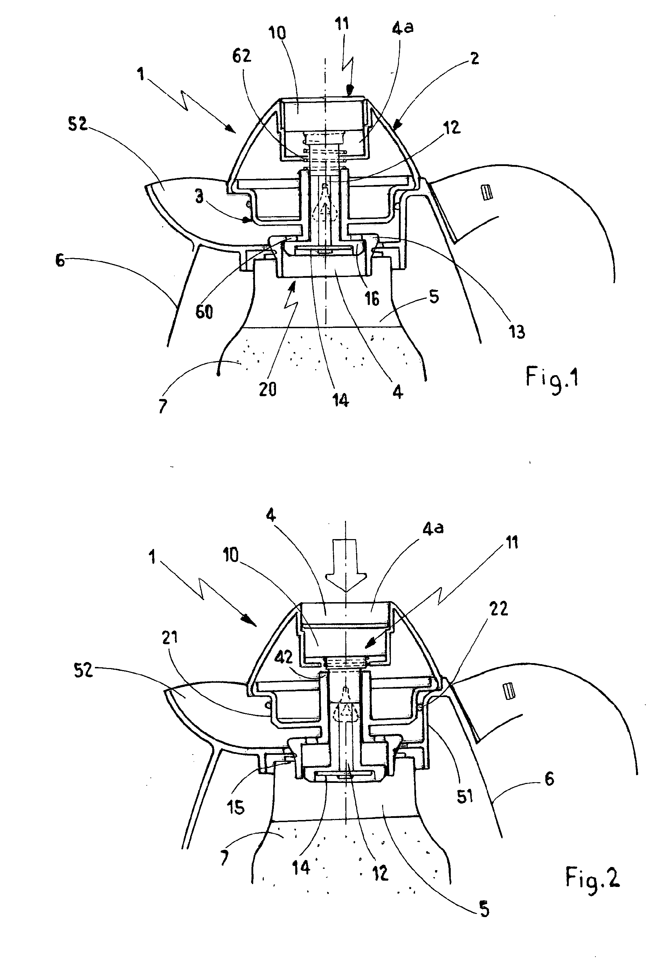

Furthermore, the cap **1** comprises a stopper **16** that is integral with said thermometer **11** and connected thereto at the stem **12,** by interference between the parts or by screwing or fitting between the lower part of the temperature display **10** and the temperature sensor **14.** The stopper **16,** in the latter case (Fig. 1-6), is shaped such as to follow, along a lenght thereof, the shape of the stem **12** and along another lenght thereof the shape of the sensor **14** situated at the end of the stem. In any case, when the sensor **14** is rod-shaped (not shown herein), the end lenght of the stopper would be substantially disc-shaped with such sizes as to provide a covering for the passageways **60** that are formed within said coupling portion **13.**

Advantageously, the longitudinal sizes of the elongated stem 12 are slightly greater than those of the middle portion **4a** of the hole **4,** thereby allowing the thermometer **11** to move within said through hole **4.** The moving stroke of the thermometer is restrained on top and at the bottom by the presence of the stopper **16,** which is integrally fastened to said thermometer **11** at the sensor **14** and the stem **12,** and respectively of the temperature display **10.**

The thermometer **11** is normally in the uppermost position, i.e. in the position where the stopper **16** is associated with the passageways **60** obtained on the coupling portion **13** of the cap **1,** such as to avoid fluidic connection between the inside **5** and the outside of the carafe **6.** According to the preferred embodiment of the invention described herein, the firm position of the thermometer **11** is obtained due to the provision of return means **62** for said thermometer **11** and said stopper **16,** which operate between the temperature display **10** and a seat **42** formed within said through hole **4.** Said return means **62** may comprise a helical spring **62** arranged between the lower part of the display **10** and said abutment **42.** Said spring **62** biases the thermometer **11** upwards thereby bringing the stopper **16** in contact with the coupling portion **13** of the lower base **3** at the passageways **60** formed on said coupling portion **13.** In this position, the liquid **7** contained in the carafe **6** cannot be poured therefrom.

When the liquid **7** has to be poured from the carafe, the user moves the thermometer **11** downwards by pressing on the display **10.** The stopper **16,** which is integral with the thermometer **11,** is thus drawn downwards and disjointed from the passageways **60** formed on the coupling portion **13** of the cap **1,** in order to allow the fluidic connection between the inside **5** and the outside of the carafe **6.**

It should be understood that the stopper **16** can also be a part of said sensor **14,** for example, by shaping said sensor such that it completely covers the passageways **60** formed on the lower portion **13,** without however departing from the scope of this patent. It should be also understood that said enlogated stem **12** and said stopper **16** can be a part of said sensor **14.**

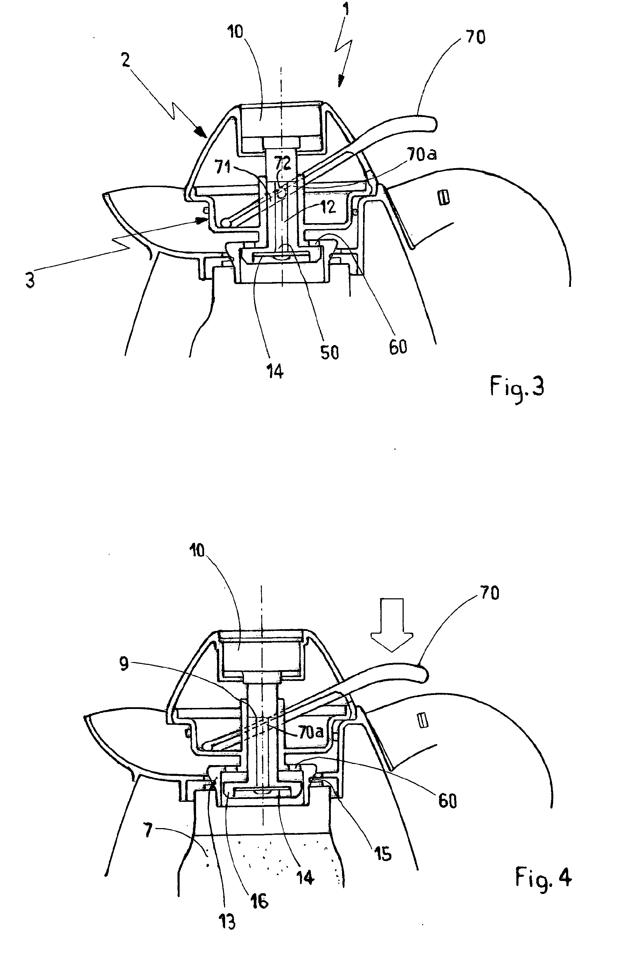

In accordance with a second embodiment of the invention (Figs. 3 and 4), the thermometer **11** can be indirectly operated by using a drive lever **70.** In this case, the thermometer **11** can be completely inserted (not shown) within the outer shell **2,** provided that the latter is made of transparent plastics, so that the user can read therethrough. In accordance with said second embodiment, the drive lever **70** is pivoted within the cap **1** and is connected to said connecting stem **12** of the thermometer **11** at the middle portion **70a** thereof. In the initial position, the lever **70** is raised and the stopper **16** rests on the coupling portion **13** of the cap, thereby preventing the fluidic connection between the inside **5** and the outside of the carafe **6** through the passageways **60.** When the carafe **6** has to be used, the drive lever **70** is moved downwards, and it also draws the thermometer **11** therewith. The connection between the lever **70** and the stem **12** can be provided by means of a suitable slot **71** which is longitudinally formed relative to the lever **70** and associated with a pin **72** connected to the stem **12** of the thermometer **11.** When the lever **70** is lowered, the pin will **72** slide within the slot **71** thereby causing the thermometer **11** to move together with the stopper **16.** Also in this case, the firm position of the thermometer **11** is provided by means of suitable return means **62** (not shown in Fig. 3-4), which operate between the temperature display **10** and a seat **42** formed within said through hole **4.**

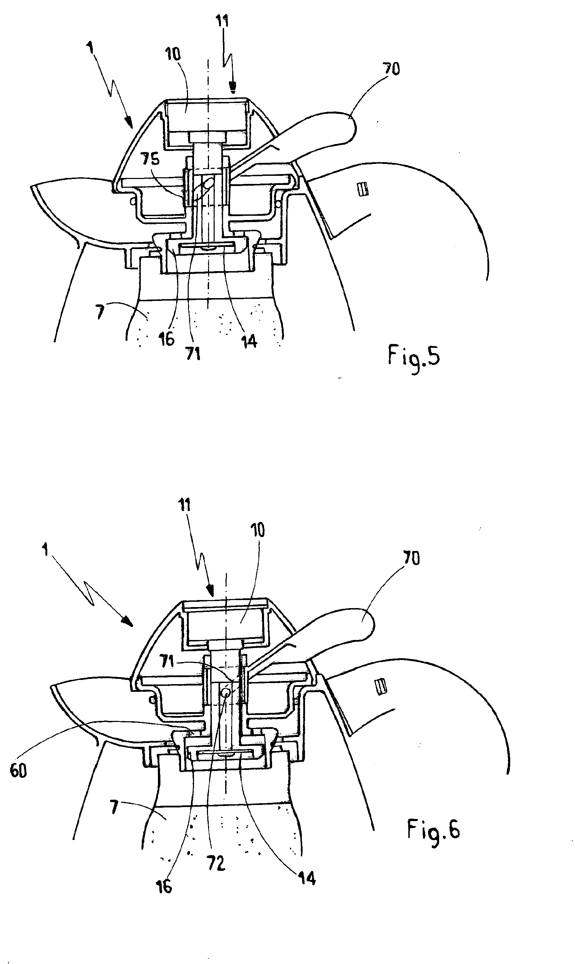

In accordance with a third embodiment of the invention (Figs. 5 and 6), the control lever **70** is fastened to the thermometer **11** at the connecting stem **12** through a collar **75** that is concentrically arranged relative to said elongated stem **12.** On the inner surface of said collar **75** a diagonal slot **71** is formed that can be associated, as before, to a pin **72** orthogonally arranged on the stem **12.** When said lever **70** is rotated on a plane transversal to the thermometer **11,** the pin **72** is drawn within the slot **71** along a fixed path within the through hole **4.** By being integral with the thermometer **11,** the stopper **16** can thus move between a first position where it is associated with the passageways **60,** in order to prevent the fluidic connection between the inside **5** and the outside of the carafe **6,** and a second position where said stopper **16** is disjoint from said passageways **60,** in order to allow fluidic connection between the inside **5** and the outside of the carafe **6.** In this case, as may be appreciated in Figs. 5 and 6, using a return means **62** is not required in order to bring the stopper **16** back to the closing position for said cap **1.** In fact, any position reached by the stopper **16** is stable. When the pouring operation is finished, in order to avoid inadvertent spillage of the liquid **7** contained within the carafe **6,** the user, can provide to bring the lever **70** back to the initial position, by rotating the same in the opposite direction relative to the one that has allowed opening the carafe **6.** It should be understood that the cap **1** may however comprise return means **62** to bring the stopper **16** back to the initial position where it is fitted to said passageways **60.** In this case, said return means **62** comprise a helical spring (not shown herein) which operates between said cap **1** and said collar **75.**

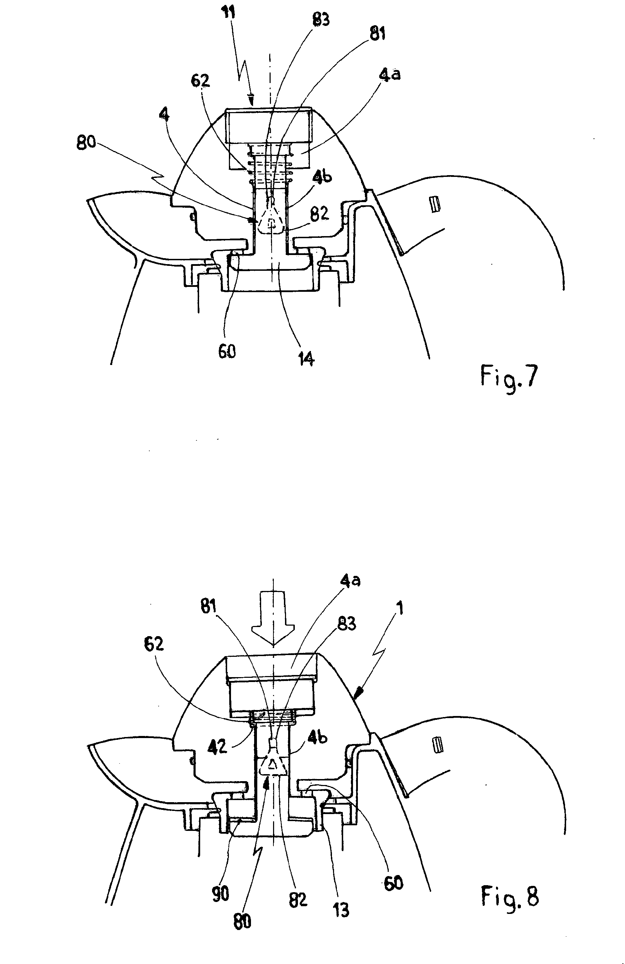

According to a fourth embodiment of the present invention (Fig. 7 and 8), the cap **1** is made as one piece, drilled in the middle thereof and accommodates said thermometer **11.** Said thermometer **11** is provided with a sensor **14** that is substantially cylindrical and has a T-shaped profile, such that it also acts as the stopper **16.** In fact, the dimension of the sensor **14,** at the lower end thereof is such that all the passageways **60** formed on the coupling portion **13** of the cap 1 are covered. Thus, in this final embodiment, the stopper **16** and the stem **12** are an integral part of the sensor **14.**

Throughout the four embodiments described herein, the cap 1 can further comprise locking means **80** for said thermometer **11.** Due to said locking means **80** the user can maintain a permanent fluidic connection between the inside **5** and the outside of the carafe **6.** Said locking means **80** comprise at least one threaded plug **81** moving crosswise relative to said elongated stem **12** and at least one driving knob **82** for said plug **81.** The plug **81,** which is caused to rotate through said knob **82,** can be associated to a seat **83** being formed on said elongated stem **12** of said thermometer **11.**

Finally, it should be said that the stopper **16** can comprise suitable seals **90** to ensure an improved sealing between the stopper and the passageways **60** formed on the lower portion **13** of said cap 1, when the carafe **6** is closed.

It should also be noted that any material can be used for making the cap, preferably plastic or thermally insulating material, without however departing from the scope of protection of the present invention.

It is thus clear how the present invention achieves the proposed objects.

## Claims

1. A cap (1) for carafes or similar containers, provided with a lower base (3) that can be firmly fastened to the mouth (20) of said carafe (6), and comprising a thermometer (11) provided with a sensor (14) that is at least partially arranged within (5) the carafe (6) for detecting, either directly or indirectly, the temperature of the liquid (7) contained therein, and a temperature display (10) that can be read from the outside, **characterized in that** the lower base (3) of said cap (1) is provided, at the mouth (20) of said carafe (6), with at least one passageway (60) for fluidic connection between the inside (5) and the outside of the carafe (6), and **in that** said thermometer (11), which can be operated either directly or indirectly, is movable between a first position wherein a closing/opening stopper (16) integral with said sensor (14), can be firmly associated to said at least one passageway (16), in order to prevent the liquid (7) from being poured from the carafe (6), and a second position wherein said stopper (16) is disjoint from said at least one passageway (60), in order to allow the liquid (7) to be poured from the carafe (6).

2. A cap according to claim 1, **characterized in that** it is provided with a central hole which is shaped such as to accommodate said thermometer movable in translation.

3. A cap according to claim 2, **characterized in that** said sensor and said temperature display are rigidly connected by an elongated stem for transmitting the temperature, said stem operating within said central hole.

4. A cap according to claims 1 to 3, **characterized in that** it comprises elastic return means for said stopper , said stopper being normally associable in a stable manner with said at least one passageway of said coupling portion, in order to prevent that the liquid is poured from the carafe.

5. A cap according to claim 4, **characterized in that** said return means comprise a helical spring arranged between the lower surface of said temperature display and at least one seat formed within said central hole.

6. A cap according to claims 1 to 5, **characterized in that** said stopper is disc-shaped.

7. A cap according to claim 6, **characterized in that** said stopper and said sensor coincide.

8. A cap according to claim 6 or 7, **characterized in that** said elongated stem is a part of said sensor or said stopper.

9. A cap according to any preceding claim, **characterized in that** said lower base is provided with a connecting portion that can be sealingly associated to said mouth of said carafe.

10. A cap according to any preceding claim, **characterized in that** it comprises a drive lever for indirectly operating said thermometer.

11. A cap according to claim 10, **characterized in that** said drive lever is rotatably fastened to said stem of said thermometer.

12. A cap according to claim 11, **characterized in that** said drive lever is pivoted from the outside of said stem of said thermometer, and is provided with a slot that can be associated to at least one pin that is integral with said thermometer.

13. A cap according to claim 11, **characterized in that** said drive lever is pivoted on said stem by means of a collar provided on the inner surface thereof with a slot that can be associated to at least one pin integral with said thermometer.

14. A cap according to claims 1 to 13, **characterized in that** it comprises means for locking said elongated stem in a position where said stopper is not associated with said at least one passageway of said coupling portion, in order to allow pouring the liquid from the carafe.

15. A cap according to claim 14, **characterized in that** said means for locking said stem comprise at least one threaded plug transversally moving relative to said elongated stem and at least one drive knob for said plug, said plug being associable with at least one seat formed on said elongated stem of said thermometer.

16. A cap according to any preceding claim, **characterized in that** said thermometer is a bimetallic thermometer.

17. A cap according to any preceding claims, **characterized in that** said thermometer is a resistance thermometer.
